# EUROPÄISCHE PATENTSCHRIFT

(11) **EP 1 344 712 B1**
(45) Veröffentlichungstag und Bekanntmachung des Hinweises auf die Patenterteilung: **21.12.2005**
(21) Anmeldenummer: 03005394.6
(22) Anmeldetag: 13.03.2003
(51) Int. Cl.: B62D 29/04, B62D 25/02

(54) **Verbundbauteil, insbesondere Fahrzeuganbauteil oder Fahrzeugpaneel**
Composite part, especially as hang-on part or body panel for a car
Pièce composite, en particulier pour une pièce rapportée ou un panneau de carosserie automobile

(30) Priorität: 14.03.2002 DE 10211734
(43) Veröffentlichungstag der Anmeldung: 17.09.2003
(73) Patentinhaber: ArvinMeritor GmbH, 63128 Dietzenbach (DE)
(72) Erfinder: Böhm, Horst, 60599 Frankfurt/Main (DE); Grimm, Rainer, 60599 Frankfurt/Main (DE); Hörmann, Karl, 94264 Langdorf (DE)
(74) Vertreter: Kitzhofer, Thomas

(56) Entgegenhaltungen:
- US-A- 3 711 148
- US-A1- 2002 098 053

## Beschreibung

Die Erfindung betrifft ein Verbundbauteil, insbesondere ein vorzugsweise selbsttragendes Fahrzeuganbauteil, ein Fahrzeugpaneel oder sogar einen Fahrzeugrahmen.

Zur Reduzierung des Fahrzeuggewichtes ist es insbesondere bei selbsttragenden Karosserien bereits bekannt, für die Beplankung Verbundbauteile als Paneele einzusetzen. Um eine große Stabilität zu erreichen, muß eine stabile Rahmenkonstruktion vorgesehen sein, an der die einzelnen Verbundbauteile zu befestigen sind.

Ein gattungsgemäßes Verbundbauteil ist aus der Patentschrift US 3711148 bekannt.

Aufgabe der Erfindung ist es, ein Verbundbauteil, insbesondere zum Einsatz im Fahrzeug zu schaffen, welches sehr leicht und sehr sicher an benachbarten Verbundbauteilen befestigt werden kann und welches sich durch eine hohe Stabilität auszeichnet.

Das erfindungsgemäße Verbundbauteil hat eine Außenwand, die beispielsweise nur aus einer dünnen Kunststoff- oder Metallfolie bestehen kann, und eine Kunststofflünterschäumung. Darüber hinaus ist in die Hinterschäumung eine Verstärkungseinlage eingebettet. Das Verbundbauteil ist dadurch gekennzeichnet, daß die Verstärkungseinlage wenigstens zwei Befestigungsflansche zur Befestigung des Verbundbauteils an einem benachbarten Verbundbauteil aufweist, wobei ein erster Befestigungsflansch näher an der Außenwand liegt als ein zweiter Befestigungsflansch. Die Verstärkungseinlage hat eine Doppelfunktion, indem sie einerseits dem Verbundbauteil eine höhere Eigenstabilität verleiht und indem sie andererseits Befestigungsflansche zur Verfügung stellt. Damit ist eine großflächige Krafteinleitung eines Befestigungsmittels in das Verbundbauteil möglich, und ein Ausreißen eines Befestigungsmittels wird verhindert. Darüber hinaus kann aufgrund dieser Konstruktion auch eine Austauschbarkeit einzelner Verbundbauteile erreicht werden. Die zwei versetzt zueinander liegenden Befestigungsflansche erlauben es, Befestigungsmittel in zwei unterschiedlichen Ebenen zu positionieren, was die Steifigkeit einer aus mehreren Verbundbauteilen bestehenden Baugruppe enorm erhöht. Das Verbundbauteil hat vorzugsweise eine weitgehend ebene, großflächige Außenwand. Das Verbundbauteil ist eine großflächige, weitgehend ebene Platte. Die Befestigungsflansche liegen in unterschiedlichen Abständen zu der ebenen Außenwand oder zu deren großflächigem, ebenen Abschnitt.

Die Befestigungsflansche sind vorzugsweise Abschnitte der Verstärkungseinlage, die rückseitig nicht von der Hinterschäumung bedeckt sind und somit freiliegen. Einerseits wird damit für die Montage leichter sichtbar, wo die Befestigungsmittel positioniert werden müssen und andererseits kann die relativ stabile Verstärkungseinlage unmittelbar, ohne Zwischenschaltung der weichen Hinterschäumung, mit dem Befestigungsmittel in Kontakt kommen.

Gemäß der bevorzugten Ausführungsform weisen die von der Hinterschäumung unbedeckten Abschnitte in dieselbe Richtung. Damit können die an den Befestigungsflanschen später angebrachten Befestigungsmittel von derselben Seite montiert werden.

Die Verstärkungseinlage kann ein Metallprofil, insbesondere ein profiliertes Blech, wie zum Beispiel ein Trapezblech sein. Diese Ausführung hat auch den Vorteil, daß die Hinterschäumung größere Ausnehmungen aufweisen kann, nämlich auf der der Außenwand entgegengesetzten Seite in "Tälern" des profilierten Blechs.

Die Verstärkungseinlage kann beispielsweise nur entlang des Randes des Verbundbauteils verlaufen und gleichsam einen eingebetteten, umlaufenden Rahmen bilden.

Die bevorzugte Ausführungsform sieht ferner vor, daß der erste Befestigungsflansch näher am Rand des vorzugsweise plattenförmigen Verbundbauteils liegt als der zweite Befestigungsflansch, wodurch es möglich ist, zwei nichtprofilierte, ebene Platten als Verbindungsteile einzusetzen, die benachbarte erste und benachbarte zweite Befestigungsflansche miteinander verbinden.

Gemäß einer weiteren Ausführungsform kann der erste und/oder zweite Befestigungsflansch zumindest abschnittsweise seitlich über den durch die Außenwand und/oder die Hinterschäumung gebildeten Rand des Verbundteils hinausragen. Der seitlich über den Rand hinausragende Abschnitt bildet ein Verbindungsteil, welches es ermöglicht, das Verbundbauteil an einem Rahmen, einer angrenzenden Wand oder einem angrenzenden Verbundbauteil zu befestigen, ohne daß zusätz-liche Platten notwendig sind. Ein weiterer Vorteil dieser Ausführungsform besteht darin, daß die Verbundbauteile am angrenzenden Teil anliegen und damit zumindest in einer Richtung ausgerichtet sind.

Die Erfindung betrifft ferner eine Baugruppe, die aus wenigstens zwei aneinandergrenzenden erfindungsgemäßen Verbundbauteilen besteht. Diese beiden Verbundbauteile werden durch gemeinsame Verbindungsteile mechanisch aneinander befestigt, wobei ein erstes Verbindungsteil die ersten Befestigungsflansche benachbarter Verbundbauteile und ein zweites Verbindungsteil die zweiten Befestigungsflansche miteinander verbinden.

Wie bereits angedeutet, können die Verbindungsteile einfache ebene Platten sein.

Diese Platten werden beispielsweise durch Schrauben, Nieten oder sogar Schweißen an den Befestigungsflanschen arretiert.

Alternativ kann das Verbindungsteil auch ein kunstharzgetränktes Band oder Seil aus Glasfasern sein, wobei zum Beispiel das Band oder Seil die benachbarten Verstärkungseinlagen oder an diesen vorgesehene Halter formschlüssig erfaßt.

Bevorzugt sind mehrere erste und/oder zweite Befestigungsflansche vorgesehen, die auf einer Ebene liegen. Damit läßt sich zum Beispiel eine Verbindungsplatte an mehreren Flanschen eines Verbundbauteils arretieren, wodurch die Krafteinleitung noch großflächiger erfolgt und zusätzliche Stabilität erreicht wird.

Die Erfindung bezieht sich insbesondere auf ein Fahrzeugpaneel für einen Fahrzeugaufbau (zum Beispiel Boden, eine oder mehrere Wände oder Dach des Fahrzeugaufbaus), wobei das Fahrzeugpaneel aus wenigstens einer erfindungsgemäßen Baugruppe besteht.

Weitere Merkmale und Vorteile der Erfindung ergeben sich aus der nachfolgenden Beschreibung und aus den nachfolgenden Zeichnungen, auf die Bezug genommen wird.
- Figur 1 zeigt eine Querschnittsansicht durch ein erfindungsgemäßes Fahrzeugpaneel bestehend aus einer erfindungsgemäßen Baugruppe, die wiederum aus zwei miteinander gekoppelten Verbundbauteilen nach der Erfindung besteht. Der Schnitt gemäß Figur 1 ist im Bereich der angrenzenden Ränder zweier benachbarter Verbundbauteile gelegt.
- Figur 2 zeigt eine perspektivische Ansicht des Fahrzeugpaneels nach Figur 1 von der Rückseite,
- Figur 3 zeigt eine perspektivische Ansicht der Rückseite eines erfindungsgemäßen Fahrzeugpaneels gemäß einer zweiten Ausführungsform und
- Figur 4 zeigt eine perspektivische Ansicht der Rückseite von mehreren verschiedenen Fahrzeugpaneelen gemäß weiterer Ausführungsformen.

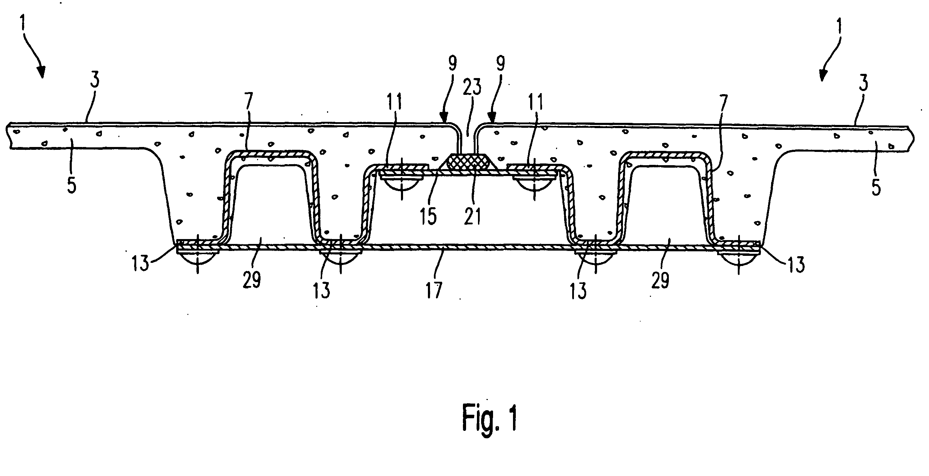

In Figur 1 sind zwei randseitig aneinandergrenzende, großflächige Verbundbauteile 1 in Plattenform dargestellt. Diese Verbundbauteile 1 bilden eine Baugruppe, die wie ein Baukasten zu mehr oder weniger großen Flächen zusammengesetzt werden kann. Die in Figur 1 gezeigte Baugruppe ist Teil eines Fahrzeugpaneels, welches insbesondere als Boden, Wand oder Decke eines Fahrzeugaufbaus Verwendung findet. Darüber hinaus könnten die gezeigten Verbundbauteile auch zu einem Fahrzeuganbauteil oder sogar zu einem selbsttragenden Fahrzeugrahmen zusammengesetzt werden.

Jedes Verbundbauteil hat eine dünne Außenwand 3, die eine Folie oder eine dünne Metallplatte sein kann, welche rückseitig und vollflächig mit einem Kunststoffmaterial, vorzugsweise einem faserverstärkten PU-Schaum hinterschäumt ist. Die Hinterschäumung trägt das Bezugszeichen 5. In die Hinterschäumung 5 ist eine Verstärkungseinlage 7 eingebettet. Die Verstärkungseinlage 7 besteht aus einem Metallprofil, genauer einem profilierten Blech, das in einer leichten Trapezform oder zum Beispiel auch rechteckig umgeformt ausgeführt sein kann. Die Verstärkungseinlage 7 verläuft durchgehend längs des Randes 9 und bildet eine Art Rahmen für das vorzugsweise rechteckige oder quadratische Verbundbauteil 1. Wie Figur 1 zu entnehmen ist, ist die Hinterschäumung 5 im Bereich einwärts des Randes und der Verstärkungseinlage 7 weitaus dünner als im Bereich der Verstärkungseinlage 7, d.h. z.B. mit Bezug auf das rechte Verbundbauteil in Fig. 1 rechts von der Verstärkungslage 7 weitaus dünner als im Bereich der Verstärkungslage 7.

Es gibt Bereiche der Verstärkungseinlage 7, die zur Rückseite hin nicht in die Hinterschäumung 5 eingebettet sind und deshalb im Gegensatz zu den übrigen Bereichen freiliegen. Nahe des Randes 9 liegt wenigstens ein Bereich der Verstärkungseinlage 7 rückseitig frei, der einen vorzugsweise ebenen ersten Befestigungsflansch 11 bildet. Darüber hinaus gibt es an jedem Verbundbauteil 1 einen oder mehrere sogenannte zweite Befestigungsflansche 13, die weiter von der Außenwand 9 entfernt liegen als der oder die ersten Befestigungsflansche 11 und die, wie in Figur 1 dargestellt, auch in einer Ebene liegen können. Die weiter von der durch die Außenwand 3 definierten Ebene entfernten Befestigungsflansche 13 sind zudem vorzugsweise auch weiter vom Rand 9 entfernt als der oder die ersten Befestigungsflansche 11.

Die benachbarten Verbundbauteile 1 werden durch Platten 15 und 17 verbunden. Die Platten 15 und 17 werden auch als erste bzw. zweite Verbindungsteile bezeichnet. Die Platte 15 liegt auf den benachbarten ersten Verbindungsflanschen 11 rückseitig vollflächig an und wird an den ersten Befestigungsflanschen 11 der beiden Verbundbauteile 1 durch Schrauben, Schweißen oder Nieten unmittelbar arretiert.

Die Platte 17 liegt an den beiden zweiten Befestigungsflanschen 13 der beiden Verbundbauteile 1 an und ist an den insgesamt vier zweiten Befestigungsflanschen 13 arretiert. Indem die Platten 15, 17 in versetzten Ebenen liegen und durch die Ausführung der Verstärkungseinlage 7 als profiliertes Blech, werden insgesamt mehrere geschlossene Hohlprofile aus Blech und Platten 15, 17 zusammengesetzt, die der gesamten Baugruppe eine hohe Stabilität geben und als Rahmen wirken.

Bei der Montage wird zuerst die Platte 15 und anschließend die Platte 17 montiert, wobei bei der Montage der Platte 15 zuvor noch ein Dichtungsband 21 im Bereich des vorzugsweise vorgesehenen Spaltes 23 zwischen benachbarten Rändern eingelegt wird.

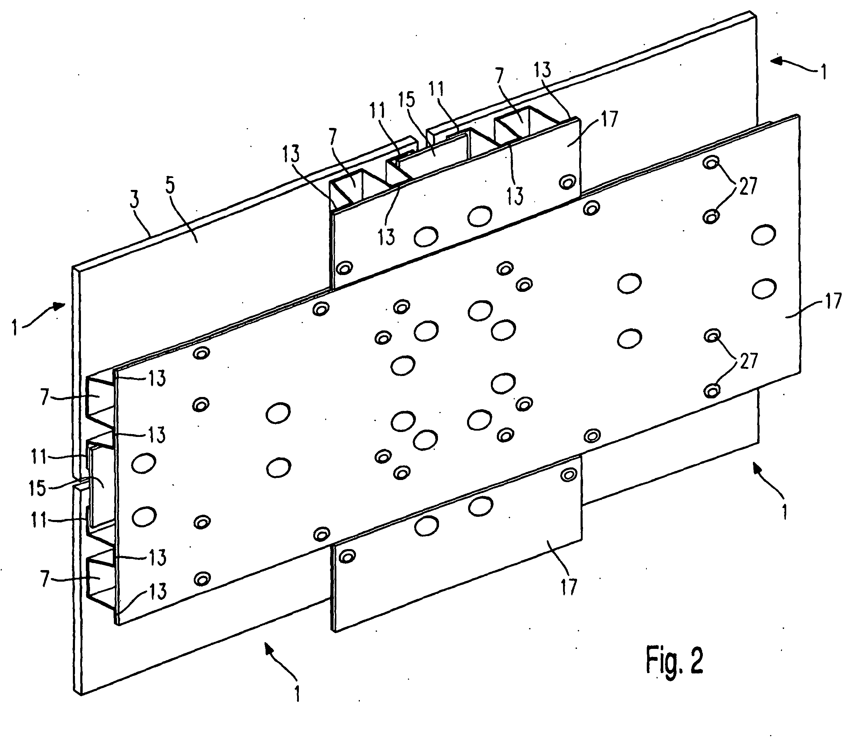

Wie Figur 2 zu entnehmen ist, verlaufen mehrere Platten 15 und 17 längs des Randes 9 angrenzender Verbundbauteile 1.

Mit 27 sind Befestigungselemente wie Schraubenköpfe, Nietenköpfe, Clinchpunkte oder Schweißpunkte bezeichnet.

Wie Figur 1 auch zu entnehmen ist, folgt, rückseitig gesehen, die Hinterschäumung 5 zwischen den zwei zweiten Befestigungsflanschen 13 in etwa der Form der Verstärkungseinlage, so daß die Hinterschäumung 5 in diesem Bereich eine Art rinnenförmige Aussparung 29 aufweist.

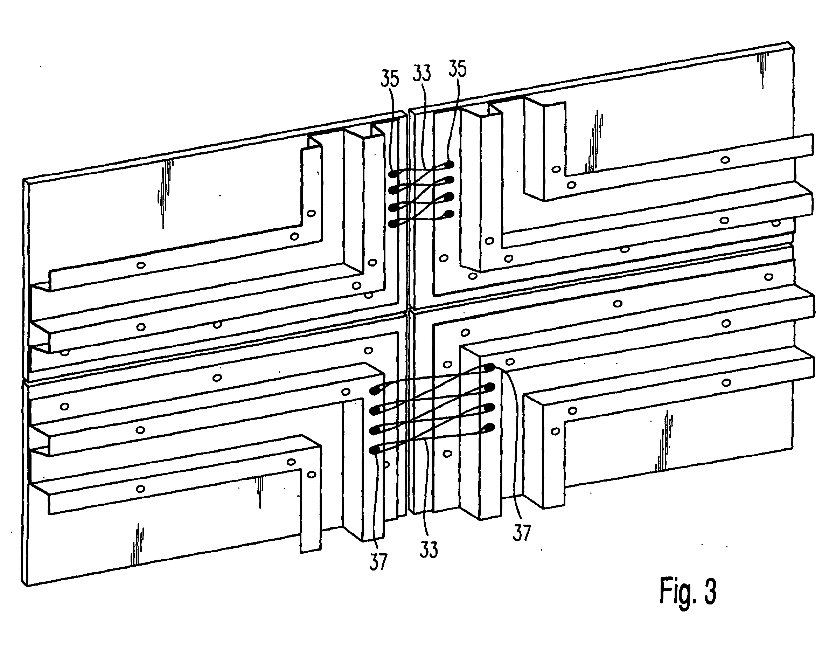

Figur 3 zeigt eine alternative Möglichkeit der Befestigung benachbarter Verbundbauteile 1.

Als Verbindungsteil wird ein Band oder Seil 33 aus mit Kunstharz getränkten Glasfasern verwendet. Das Band oder Seil 33 wird um die Zapfen 35 und 37 geschnürt, die an den ersten bzw. zweiten Befestigungsflanschen 11 bzw. 13 angebracht sind und als Halter wirken. Alternativ könnte das Blech auch ausgestellte Nasen besitzen, um die herum das Band oder Seil 33 verläuft.

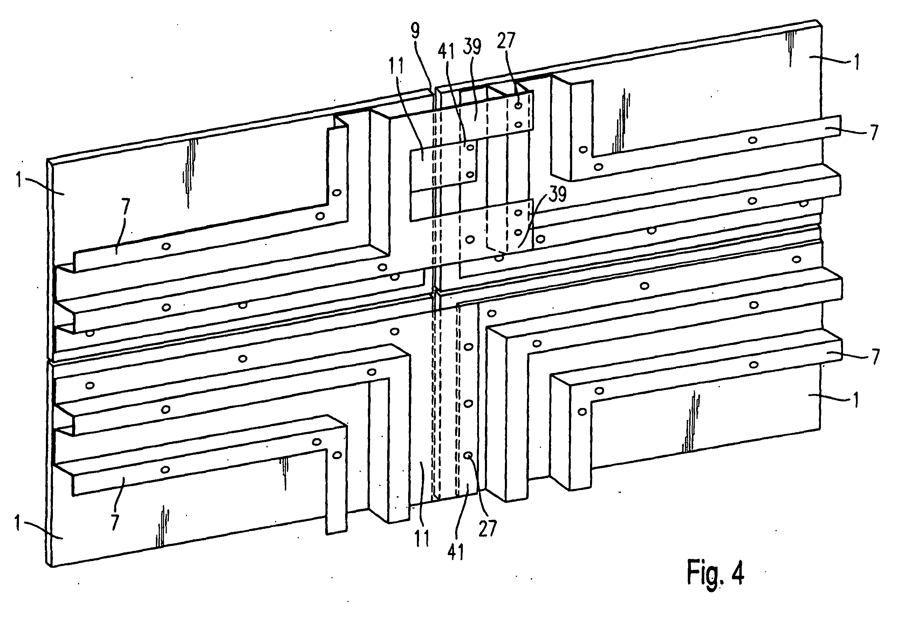

In Figur 4 sind verschiedene Verstärkungseinlagen 7 dargestellt. Das obere linke Verbundbauteil hat vom zweiten Befestigungsflansch 13 zum rechten oberen Verbundbauteil überstehende Abschnitte 39, die die zweiten Platten 17 ersetzen. Diese Abschnitte 39 stehen seitlich gegenüber dem durch die Außenwand 3 und die Hinterschäumung 5 definierten Rand 9 vor und überlappen sich mit dem zweiten Befestigungsflansch 13 des benachbarten Verbundbauteils 1. Die überstehenden Abschnitte 39 liegen unmittelbar auf dem zweiten Befestigungsflansch 13 auf und können durch die bereits erwähnten Verbindungsarten aneinander befestigt werden. Zu sehen ist auch, daß alternativ oder zusätzlich auch der erste Befestigungsflansch 11 einen Abschnitt 41 hat, der über den Rand 9 seitlich hinausragt und auf dem ersten Befestigungsflansch 11 des rechten Verbundbauteils zu liegen kommt, um an ihm befestigt zu werden.

Es ist auch möglich, nur den ersten oder nur den zweiten Befestigungsflansch 11, 13 mit einem überstehenden Abschnitt 39 oder 41 zu versehen, der unmittelbar am Verbindungsflansch des benachbarten Verbundbauteils anliegt, so daß die separaten Platten 15, 17 zumindest teilweise entfallen können.

Die vorstehenden Abschnitte 39, 41 bilden sozusagen als einstückig an die Befestigungsflansche 11, 13 angeformte Teile die im Zusammenhang mit Figur 2 erwähnten Verbindungsteile.

Die vorstehenden Abschnitte 39, 41 können sogar über die gesamte Seitenlänge einer Verstärkungseinlage verlaufen, wie am unteren linken Verbundbauteil anhand des überstehenden Abschnittes 41 des ersten Befestigungsflansches 11 zu sehen.

Wichtig ist auch, daß die überstehenden Abschnitte etwas höhenversetzt sein sollten, nämlich um eine Blechdicke, mit Bezug auf Figur 4, in Richtung aus der Zeichenebene heraus, damit dann, wenn der überstehenden Abschnitt, zum Beispiel der Abschnitt 41, auf dem benachbarten Befestigungsflansch 11 aufliegt, die beiden Außenseiten der Außenwände 3 der benachbarten Verbundbauteile in einer Ebene liegen.

Möglich ist es auch, daß von beiden benachbarten Verbundbauteilen Abschnitte in Richtung zum anderen Verbundbauteil gegenüber dem zugehörigen Rand 9 überstehen. Damit ließe sich auch eine Art Steckverbindung zur Vorfixierung realisieren.

Zur besseren Darstellung der Verstärkungseinlagen ist im übrigen in den Figuren 2 bis 4 die Hinterschäumung im Bereich der Verstärkungseinlage teilweise weggelassen worden.

## Patentansprüche

1. Verbundbauteil, insbesondere Fahrzeuganbauteil oder Fahrzeugpaneel, mit einer Außenwand (3),
einer an der Rückseite der Außenwand (3) vorgesehenen Hinterschäumung (5) und
einer in die Hinterschäumung (5) eingebetteten Verstärkungseinlage (7), **dadurch gekennzeichnet**, daβ die Verstärkungsanlage wenigstens zwei Befestigungsflansche (11, 13) zur Befestigung des Verbundbauteils an einem benachbarten Verbundbauteil hat,
wobei ein erster Befestigungsflansch (11) näher an der Außenwand (3) liegt als ein zweiter Befestigungsflansch (13).

2. Verbundbauteil nach Anspruch 1, **dadurch gekennzeichnet, daß** die Befestigungsflansche (11, 13) Abschnitte der Verstärkungseinlage (7) sind, die nicht von der Hinterschäumung (5) bedeckt sind.

3. Verbundbauteil nach Anspruch 2, **dadurch gekennzeichnet, daß** die von der Hinterschäumung (5) unbedeckten Abschnitte, die die Befestigungsflansche (11, 13) bilden, in dieselbe Richtung weisen.

4. Verbundbauteil nach einem der vorhergehenden Ansprüche, **dadurch gekennzeichnet, daß** die Verstärkungseinlage (7) ein Metallprofil ist.

5. Verbundbauteil nach Anspruch 4, **dadurch gekennzeichnet, daß** das Metallprofil ein profiliertes Blech, insbesondere Trapezblech ist.

6. Verbundbauteil nach einem der vorhergehenden Ansprüche, **dadurch gekennzeichnet, daß** die Verstärkungseinlage (7) nur entlang des Randes (9) des Verbundbauteils (1) verläuft.

7. Verbundbauteil nach einem der vorhergehenden Ansprüche, **dadurch gekennzeichnet, daß** der erste Befestigungsflansch (11) am Rand (9) des Verbundbauteils (1) liegt und der zweite Befestigungsflansch (13) vom Rand (9) entfernter als der erste Befestigungsflansch (11) angeordnet ist.

8. Verbundbauteil nach einem der vorhergehenden Ansprüche, **dadurch gekennzeichnet, daß** mehrere erste und/oder zweite Befestigungsflansche vorgesehen sind, wobei die mehreren ersten und/oder die mehreren zweiten Befestigungsflansche (11, 13) jeweils in einer Ebene liegen.

9. Verbundbauteil nach einem der vorhergehenden Ansprüche, **dadurch gekennzeichnet, daß** der erste und/oder zweite Befestigungsflansch (11, 13) zumindest abschnittsweise seitlich über den durch die Außenwand (3) und/oder die Hinterschäumung (5) gebildeten Rand (9) des Verbundbauteils (1) hinausragt.

10. Baugruppe bestehend aus wenigstens zwei seitlich aneinandergrenzenden Verbundbauteilen (1) nach einem der vorhergehenden Ansprüche, **dadurch gekennzeichnet, daß** die zwei Verbundbauteile (1) durch gemeinsame Verbindungsteile aneinander befestigt sind, wobei ein erstes Verbindungsteil die ersten Befestigungsflansche (11) benachbarter Verbundbauteile (1) und ein zweites Verbindungsteil die zweiten Befestigungsflansche (13) benachbarter Verbundbauteile (1) miteinander koppelt.

11. Baugruppe nach Anspruch 10 mit wenigstens einem Verbundbauteil (1) nach Anspruch 9, **dadurch gekennzeichnet, daß** das Verbindungsteil der über den Rand (9) seitlich hinausragende Abschnitt eines ersten und/oder zweiten Befestigungsflansches (11, 13) ist, der den ersten und/oder zweiten Befestigungsflansch (11, 13) des benachbarten Verbundbauteils (1) überlappt.

12. Baugruppe nach Anspruch 10 oder 11, **dadurch gekennzeichnet, daß** die Verbindungsteile Platten (15, 17) sind.

13. Baugruppe nach einem der Ansprüche 10 bis 12, **dadurch gekennzeichnet, daß** die Verbindungsteile kraft- oder formschlüssig an den Befestigungsflanschen arretiert sind.

14. Baugruppe nach einem der Ansprüche 10 bis 13, **dadurch gekennzeichnet, daß** die Verbindungsteile durch Schrauben, Nieten oder Schweißen an den Befestigungsflanschen (11, 13) arretiert sind.

15. Baugruppe nach Anspruch 10, **dadurch gekennzeichnet, daß** die Verbindungsteile kunstharzgetränkte Bänder oder Seile (33) aus Glasfasern sind, die benachbarte Verstärkungseinlagen (7) oder an diesen vorgesehene Halter formschlüssig erfassen.

16. Fahrzeugpaneel, bestehend aus wenigstens einer Baugruppe nach einem der Ansprüche 10 bis 14 und plattenförmigen Verbindungsteilen.

## Claims

1. A composite part, in particular a mount-on vehicle part or a vehicular panel, comprising an outer wall (3),
a foamed backing (5) provided on the rear side of the outer wall (3) and
a reinforcement insert (7) embedded in the foamed backing (5), **characterized in that** the reinforcement insert has at least two fastening flanges (11, 13) for fastening the composite part to an adjacent composite part,
a first fastening flange (11) having a smaller distance from the outer wall (3) than a second fastening flange (13).

2. The composite part according to claim 1, **characterized in that** the fastening flanges (11, 13) are portions of the reinforcement insert (7) which are not covered by the foamed backing (5).

3. The composite part according to claim 2, **characterized in that** the portions which are not covered by the foamed backing (5) and form the fastening flanges (11, 13) face in the same direction.

4. The composite part according to any of the preceding claims, **characterized in that** the reinforcement insert (7) is a metal section.

5. The composite part according to claim 4, **characterized in that** the metal section is a profiled sheet metal, in particular a trapezoidal sheet metal.

6. The composite part according to any of the preceding claims, **characterized in that** the reinforcement insert (7) extends only along the edge (9) of the composite part (1).

7. The composite part according to any of the preceding claims, **characterized in that** the first fastening flange (11) is disposed on the edge (9) of the composite part (1) and the second fastening flange (13) is arranged so as to be spaced further away from the edge (9) than the first fastening flange (11).

8. The composite part according to any of the preceding claims, **characterized in that** a plurality of first and/or second fastening flanges is provided, the plurality of the first and/or of the second fastening flanges (11, 13) lying all in one common plane, respectively.

9. The composite part according to any of the preceding claims, **characterized in that** at least sections of the first and/or second fastening flange (11, 13) laterally protrude beyond the edge (9) of the composite part (1), which edge is defined by the outer wall (3) and/or the foamed backing (5).

10. An assembly unit consisting of at least two laterally adjoining composite parts (1) according to any of the preceding claims, **characterized in that** the two composite parts (1) are fastened to each other by common connecting elements, a first connecting element coupling the first fastening flanges (11) of adjacent composite parts (1) and a second connecting element coupling the second fastening flanges (13) of adjacent composite parts (1).

11. The assembly unit according to claim 10, comprising at least one composite part (1) according to claim 9, **characterized in that** the connecting element is the portion of a first and/or second fastening flange (11, 13) which laterally protrudes beyond the edge (9) and overlaps the first and/or second fastening flange (11, 13) of the adjacent composite part (1).

12. The assembly unit according to claim 10 or 11, **characterized in that** the connecting elements are plates (15, 17).

13. The assembly unit according to any of the claims 10 to 12, **characterized in that** the connecting elements are arrested on the fastening flanges by means of an interlocking fit or frictional fit.

14. The assembly unit according to any of the claims 10 to 13, **characterized in that** the connecting elements are arrested on the fastening flanges (11, 13) by screw bolts, rivets or by welding.

15. The assembly unit according to claim 10, **characterized in that** the connecting elements are bands or ropes (33) which are made of glass fibers and are impregnated with resin, the connecting elements engaging adjacent reinforcement inserts (7) or supports on adjacent reinforcement inserts with an interlocking fit.

16. A vehicular panel consisting of at least one assembly unit according to any of the claims 10 to 14 and of plate-shaped connecting elements.

## Revendications

1. Pièce composite, en particulier pièce à ajouter sur un véhicule ou panneau de véhicule, comprenant :
- une paroi extérieure (3),
- une pièce arrière en mousse (5) prévue sur la face arrière de la paroi extérieure (3), et
- un insert de renforcement (7) encastré dans la pièce arrière en mousse (5),
**caractérisée en ce que** l'insert de renforcement comporte au moins deux brides de fixation (11, 13) pour la fixation de la pièce composite à une pièce composite voisine,
une première bride de fixation (11) étant située plus près de la paroi extérieure (3) qu'une deuxième bride de fixation (13).

2. Pièce composite selon la revendication 1, **caractérisée en ce que** les brides de fixation (11, 13) sont des tronçons de l'insert de renforcement (7), qui ne sont pas recouverts par la pièce arrière en mousse (5).

3. Pièce composite selon la revendication 2, **caractérisée en ce que** les tronçons non recouverts par la pièce arrière en mousse (5) et qui forment les brides de fixation (11, 13), sont orientés dans la même direction.

4. Pièce composite selon l'une des revendications précédentes, **caractérisée en ce que** l'insert de renforcement (7) est un profilé métallique.

5. Pièce composite selon la revendication 4, **caractérisée en ce que** le profilé métallique est une tôle profilée, en particulier une tôle en trapèze.

6. Pièce composite selon l'une des revendications précédentes, **caractérisée en ce que** l'insert de renforcement (7) s'étend seulement le long du bord (9) de la pièce composite (1).

7. Pièce composite selon l'une des revendications précédentes, **caractérisée en ce que** la première bride de fixation (11) est située au bord (9) de la pièce composite (1) et **en ce que** la deuxième bride de fixation (13) est plus éloignée du bord (9) que la première bride de fixation (11).

8. Pièce composite selon l'une des revendications précédentes, **caractérisée en ce que** sont prévues plusieurs premières et/ou deuxièmes brides de fixation, ces plusieurs premières et/ou deuxièmes brides de fixation (11, 13) étant disposées chacune dans un plan.

9. Pièce composite selon l'une des revendications précédentes, **caractérisée en ce que** la première et/ou la deuxième bride de fixation (11, 13) fait saillie au moins par tronçons latéralement au-dessus du bord (9) de la pièce composite (1) formé par là paroi extérieure (3) et/ou par la pièce arrière en mousse (5).

10. Module se composant d'au moins deux pièces composites (1) selon l'une des revendications précédentes mutuellement contiguës latéralement, **caractérisé en ce que** les deux pièces composites (1) sont fixées l'une à l'autre par des pièces de liaison communes, une première pièce de liaison couplant ensemble les premières brides de fixation (11) de la pièce composite (1) voisine et une deuxième pièce de liaison couplant ensemble les deuxièmes brides de renforcement (13) de la pièce composite (1) voisine.

11. Module selon la revendication 10, avec au moins une pièce composite (1) selon la revendication 9, **caractérisé en ce que** la pièce de liaison est constituée d'un tronçon latéralement en saillie au-dessus du bord (9) d'une première et/ou d'une deuxième brides de fixation (11, 13), le tronçon recouvrant la première et/ou la deuxième brides de fixation (11, 13) de la pièce composite (1) voisine.

12. Module selon la revendication 10 ou 11, **caractérisé en ce que** les pièces de liaison sont des plaques (15, 17).

13. Module selon l'une des revendications 10 à 12, **caractérisé en ce que** les pièces de liaison sont bloquées par une liaison à force ou de forme aux brides de fixation.

14. Module selon l'une des revendications 10 à 13, **caractérisé en ce que** les pièces de liaison sont bloquées aux brides de fixation (11, 13) par des vis, par des rivets ou par des soudures.

15. Module selon la revendication 10, **caractérisé en ce que** les pièces de liaison sont des bandes ou des câbles (33) en fibres de verre imbibées de résine synthétique qui saisissent par une liaison de forme les inserts de renforcement (7) voisins ou des supports prévus sur ceux-ci.

16. Panneau de véhicule, se composant d'au moins un module monté selon l'une des revendications 10 à 14 et de pièces de liaison en forme de plaques.
